# FASCICULE DE BREVET EUROPEEN

(11) **EP 1 317 201 B1**
(45) Date de publication et mention de la délivrance du brevet: **29.12.2004**
(21) Numéro de dépôt: 01967460.5
(22) Date de dépôt: 07.09.2001
(51) Int. Cl.: A47J 37/06

(54) **APPAREIL CULINAIRE A PLAQUE DE CUISSON AMOVIBLE PAR DISPOSITIF DE BLOCAGE ET DEBLOCAGE**
KOCHGERÄT MIT EINER ABNEHMBAREN HEIZPLATTE UND EINER VERRIEGELUNGSVORRICHTUNG FÜR DIESE PLATTE
COOKING APPLIANCE WITH REMOVABLE COOKING PLATE BY LOCKING AND UNLOCKING DEVICE

(30) Priorité: 15.09.2000 FR 0011808
(43) Date de publication de la demande: 11.06.2003
(73) Titulaire: SEB S.A., 69130 Ecully (FR)
(72) Inventeur: PATENOTRE, Yves, F-74370 Desingy (FR)
(74) Mandataire: Somnier, Jean-Louis
(86) Numéro de dépôt international: PCT/FR2001/002793
(87) Numéro de publication internationale: WO 2002/021985

(56) Documents cités:
- DE-U- 8 625 495
- US-A- 2 795 182
- US-A- 2 903 959
- US-A- 3 348 470
- US-A- 3 746 837

## Description

La présente invention a pour objet des appareils culinaires à plaques de cuisson amovibles par dispositif de blocage et de déblocage, comme ils sont connus par le document US 2 795 182.

Le secteur technique de l'invention est le domaine des appareils dits de petit électro-ménager.

L'application principale de l'invention concerne essentiellement les appareils de type grils, gaufriers, croque-monsieurs, comprenant deux plaques chauffantes articulées l'une à l'autre et définissant entre elles un espace pour l'aliment à cuire, chaque plaque chauffante étant chauffée par un élément chauffant électrique en contact avec la plaque.

La possibilité de rendre les plaques de cuisson amovibles permet de réaliser des appareils multifonctions pouvant donc être soit croque-monsieurs, soit gaufriers, soit grils par un simple changement de plaques: pour cela celles-ci sont immobilisées dans des coques par des moyens de blocage que l'on peut déplacer pour libérer lesdites plaques et les interchanger. La manipulation de tels moyens est cependant peu pratique et confortable, présentant également des risques de brûlures pour l'utilisateur. Pour pallier à cet inconvénient certains appareils sont munis de systèmes de crochetage qui facilitent leur utilisation mais sont en général d'une construction coûteuse.

L'objectif de la présente invention est de pallier aux inconvénients ci-dessus en rendant le changement de plaque plus pratique, avec un minimum de pièces, permettant de réduire le coût de fabrication et de montage, tout en diminuant le danger de brûlures.

Un tel objectif est atteint avec un appareil culinaire comportant au moins une coque et au moins un bouton de commande mobile par rapport à la coque, la coque intégrant un élément chauffant et portant une plaque de cuisson amovible qui est fixée sur l'élément chauffant par au moins un moyen de blocage et qui est libérable par déplacement de ce moyen. Selon l'invention l'appareil comporte au moins un levier formant un ensemble arbre-manivelle pivotant autour d'un axe par lequel il est fixé à la coque, une partie du levier coopérant avec le bouton de commande et une autre partie entraînant le moyen de blocage quand le bouton de commande est sollicité et agit sur le levier. Le levier comporte un corps central disposé suivant cet axe, tournant autour de celui-ci et situé entre les parties coopérant d'un côté avec le bouton de commande et entraînant de l'autre côté le moyen de blocage constitué par un crochet basculant autour de cet axe.

Dans un mode préférentiel de réalisation ledit levier est un fil métallique recourbé pour constituer les parties coopérant d'un côté avec ledit bouton et entraînant de l'autre côté le crochet, ces deux parties formant avec la partie du fil métallique, qui les relie et qui en constitue le corps central, un ensemble arbre-manuel.

Le résultat est de nouveaux appareils culinaires à plaques de cuisson amovibles par un dispositif de blocage/déblocage de plaques de cuisson qui permet d'atteindre l'objectif énoncé précédemment grâce à un sous-ensemble composé de seulement trois pièces qui correspondent à un bouton de commande, un levier ou renvoi, et un moyen de blocage par un crochet de verrouillage, pour chaque plaque.

Le bouton de commande, de forme ergonomique, est placé sur l'appareil de manière à être pratique à utiliser, visible et assez éloigné des plaques pour ne pas se brûler: il permet ainsi de débloquer celles-ci et de les interchanger suivant les aliments que l'on désire préparer. L'appareil culinaire ainsi réalisé est un appareil multifonctions pouvant assurer par exemple la fonction de grils, gaufriers, croque-monsieurs......

On pourrait citer d'autres avantages de la présente invention mais ceux cités ci-dessus en montrent déjà suffisamment pour en prouver la nouveauté et l'intérêt. La description et les dessins ci-après représentent un exemple de réalisation de l'invention mais n'ont aucun caractère limitatif: d'autres réalisations sont possibles dans le cadre de la portée et de l'étendue de la présente invention:
- la figure 1 est une vue en coupe d'un appareil culinaire équipé d'un dispositif suivant la présente invention;
- la figure 2 est une vue en perspective partielle d'une coque de l'appareil suivant la figure 1, sans la plaque de cuisson correspondante et dépouillée des autres accessoires autres que le dispositif de blocage/déblocage suivant l'invention;
- la figure 3 est une vue en coupe suivant le plan III-III' de la figure 2 du dispositif en position de déverrouillage/déblocage;

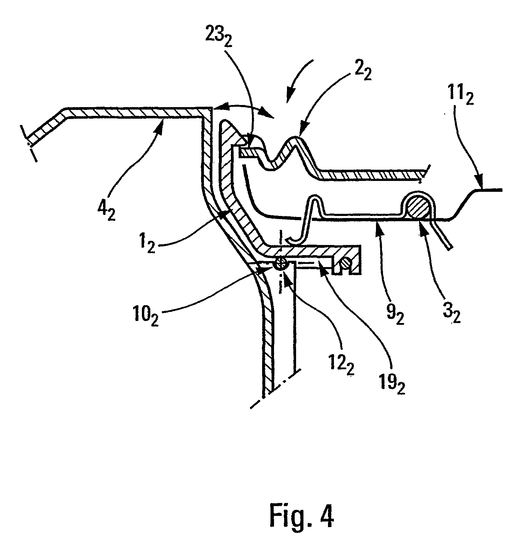

- la figure 4 est la même vue en coupe que celle de la figure 3 avec le dispositif en position de blocage/verrouillage.

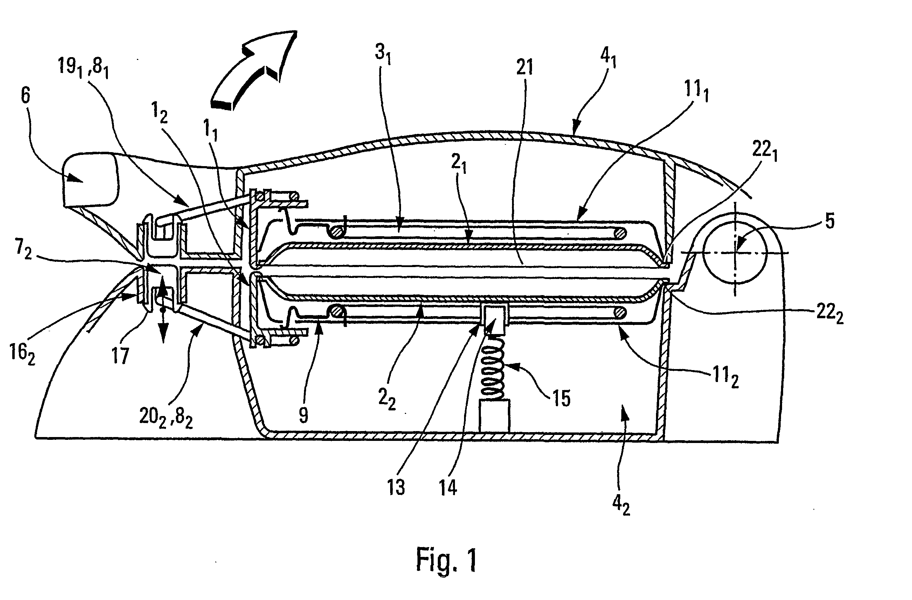

Dans le mode de réalisation représenté sur la figure 1 l'appareil culinaire est un appareil multifonctions de type croque/gaufre/gril, constitué par deux coques 4₁, 4₂, intégrant chacune un élément chauffant 3₁, 3₂ et portant également chacune une plaque de cuisson 2₁, 2₂ amovible: lesdites coques 4 sont articulées suivant un axe charnière 5 de telle façon que lesdites plaques de cuisson 2 portées par lesdites coques définissent entre elles un espace 21 apte à recevoir tous aliments à cuire.

La coque supérieure 4₁ peut être soulevée pour accéder audit espace 21 par action sur la poignée 6 faisant pivoter ladite coque 4₁ autour de l'axe d'articulation 5. Des réflecteurs 11₁, 11₂ sont disposés entre les éléments chauffants 3₁, 3₂ et les surfaces intérieures des coques 4₁, 4₂, pour renvoyer et concentrer la chaleur vers l'espace 21.

L'appareil suivant l'invention comporte au moins un bouton de commande 7 mobile par rapport à chaque coque 4 et au moins un levier 8 dont une partie 20 coopère avec ledit bouton 7 et une autre partie 19 entraîne un moyen de blocage 1 de la plaque de cuisson 2, quand ledit bouton est sollicité et agit sur ledit levier 8.

Les sous-ensembles des dispositifs de blocage/déblocage ou verrouillage/déverrouillage des plaques de cuisson 2 sont de préférence identiques dans la coque inférieure 4₂ et la coque supérieure 4₁.

Lesdits boutons 7 de commande sont mobiles en translation dans un logement 16 réalisé dans chaque coque 4 et autorisant un mouvement linéaire du bouton perpendiculairement à, d'une part, l'axe 12 de rotation défini ci-après, et, d'autre part, à la surface extérieure de la coque 4.

De préférence ces boutons sont clippés à l'avant de l'appareil dans un des angles situés du côté de l'ouverture de celui-ci, de telle façon que quand l'appareil est fermé ces boutons ne soient plus accessibles et qu'en position ouverte ces boutons soient disposés à une distance des plaques de cuisson 2 qu'ils permettent de débloquer tel que l'utilisateur ne puisse toucher la plaque correspondante 2 quand il actionne un desdits boutons 7.

Sous chaque bouton 7 est monté un levier 8 dont la partie 20 vient en butée contre lui: chaque bouton 7 est guidé par deux nervures 17 sur deux côtés opposés.

Le moyen de blocage de chaque plaque de cuisson 2 est un crochet 1 basculant autour d'un axe 12 et ledit levier 8 comporte un corps central 18 disposé suivant cet axe 12, tournant autour de celui-ci et situé entre les parties 20, 19 coopérant d'un côté avec ledit bouton 7 et entraînant de l'autre côté le crochet 1.

Ledit levier ou renvoi 8 est de préférence un fil métallique recourbé pour former des bras dirigés latéralement par rapport au corps central rectiligne 18 et constituer lesdites parties 20, 19: ces deux parties 20,19 forment, avec la partie du fil métallique qui les relie et qui en constitue le corps central 18, un ensemble arbre-manivelle, chaque partie recourbée transmettant par le corps central 18 à l'autre partie tout moment de rotation qu'elle reçoit par toute force appliquée sur le bras qui la constitue; plus ce bras est long et le point d'application de la force est éloigné du corps 18 formant axe de rotation, plus le moment est important et le mouvement de rotation facilité.

Chaque renvoi ou levier 8 est posé et clipsé dans des paliers 10 intégrés à la coque 4 par son corps central 18 formant axe de rotation. Chaque crochet 1 est lui-même clipsé sur la partie recourbée 19 dudit levier 8 qui lui est associé.

Tel que représenté sur les figures jointes les deux dites parties 20, 19 de chaque levier 8 sont les extrémités de celui-ci, mais dans un autre mode de réalisation, la partie 19, par exemple, pourrait être pliée différemment et le corps 18 du levier 8 continue au-delà de cette partie 19 et être guidé, pour pivoter sur lui-même autour de l'axe 12, par un autre palier situé à l'opposé de la partie 20 par rapport au crochet 1.

L'appareil suivant l'invention comporte également au moins un ressort de rappel 9 de chaque moyen de blocage 1 ramenant celui-ci en position de verrouillage de chaque plaque 2 en l'absence de sollicitation du bouton de commande 7 correspondant, maintenant ainsi en position et en contrainte le sous-ensemble constituant le dispositif de blocage/déblocage de plaque de cuisson suivant l'invention.

L'appareil culinaire représenté sur les figures jointes comporte en outre sous la plaque de cuisson inférieure 2₂ et du même côté que l'élément chauffant 3₂ un ressort 15 qui soulève ladite plaque de cuisson 2₂ par rapport à la coque 4₂ quand le moyen de blocage 1₂ est dégagé de celle-ci.

Ce ressort 15 peut faire partie d'un système de régulation composé d'une sonde 13, d'un thermostat 14 et de ce dit ressort 15 qui plaque la sonde 13 contre la plaque de cuisson 2 lorsque celle-ci est verrouillée.

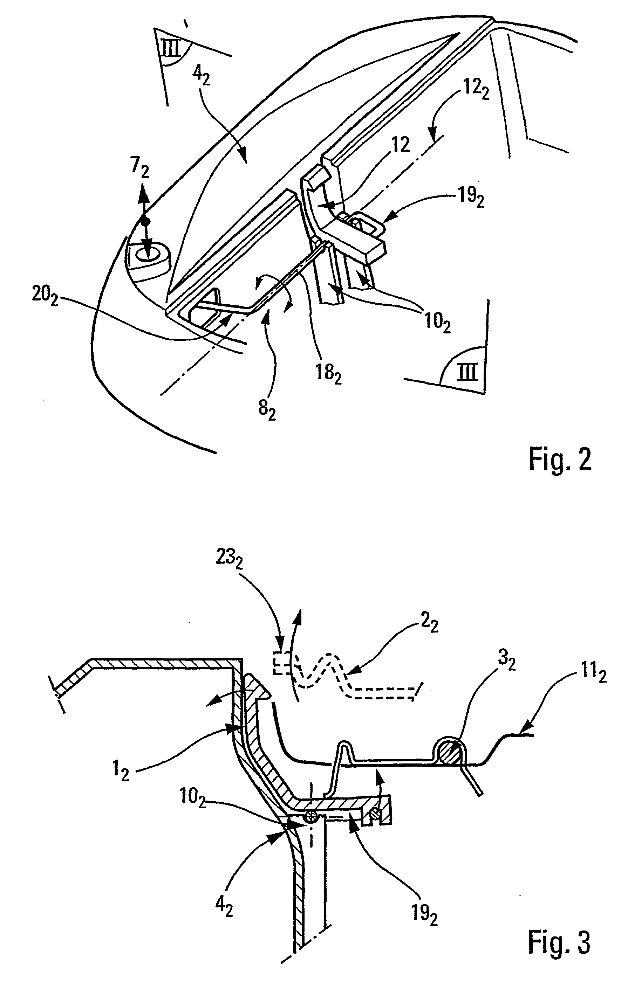

Pour déverrouiller chacune des plaques de cuisson 2, on appuie sur chaque bouton de commande 7: par l'intermédiaire du renvoi ou levier 8 qui pivote alors autour de l'axe 12, chaque crochet 1 recule en pivotant autour de lui-même pour laisser passer la plaque 2 de cuisson telle que représentée sur la figure 3. La plaque inférieure 2₂ remonte de son côté sous la pression de la sonde 13 du thermostat et la plaque supérieure 2₁ se libère par son propre poids.

Lorsque l'on veut reverrouiller après avoir interchangé et/ou nettoyé lesdites plaques de cuisson 2, on glisse la lèvre 22 qui constitue le rebord de chaque plaque 2, ou qui peut être un ergot, et qui est située à l'opposé de celle 23 qui vient buter sur chaque crochet 1, dans tout logement compatible de la coque correspondante 4. La lèvre 23 de la plaque 2 considérée butant alors sur le crochet 1 fait reculer celui-ci en le faisant pivoter sur lui-même autour de l'axe 12 afin de la laisser passer, tel que représenté sur la figure 3. Une fois la plaque 2 en position, le crochet 1, sous la contrainte du ressort de rappel 9, revient dans sa position initiale et verrouille la plaque 2.

## Revendications

1. Appareil culinaire comportant au moins une coque (4), et au moins un bouton de commande (7) mobile par rapport à la coque (4), la coque (4) intégrant un élément chauffant (3) et portant une plaque de cuisson (2) amovible qui est fixée sur ledit élément chauffant (3) par au moins un moyen de blocage (1) et qui est libérable par déplacement de ce moyen (1), **caractérisé en ce qu'**il comporte au moins un levier (8) formant un ensemble arbre-manivelle pivotant autour d'un axe (12) par lequel il est fixé à la coque (4), une partie (20) du levier (8) coopèrant avec le bouton de commande (7) et une autre partie (19) entraînant le moyen de blocage (1) quand le bouton de commande (7) est sollicité et agit sur le levier (8).

2. Appareil culinaire selon la revendication 1, **caractérisé en ce que** le levier (8) comporte un corps central (18) disposé suivant l'axe (12), tournant autour de celui-ci et situé entre les parties (20, 19) coopérant d'un côté avec le bouton de commande (7) et entraînant de l'autre côté le moyen de blocage (1) constitué par un crochet (1) basculant autour de l'axe (12).

3. Appareil culinaire suivant la revendication 2, **caractérisé en ce que** le levier (8) est un fil métallique recourbé pour constituer les parties (20, 19) coopérant d'un côté avec le bouton de commande (7) et entraînant de l'autre côté le crochet (1), ces deux parties formant avec la partie du fil métallique qui les relie et qui en constitue le corps central (18) un ensemble arbre-manivelle.

4. Appareil culinaire suivant l'une quelconque des revendications 1 à 3, **caractérisé en ce que** le bouton de commande (7) est mobile en translation dans un logement (16) réalisé dans la coque (4) et perpendiculaire à la surface extérieure de celle-ci.

5. Appareil culinaire suivant l'une quelconque des revendications 1 à 4, **caractérisé en ce que** les deux parties (20, 19) du levier (8) sont les extrémités de celui-ci.

6. Appareil culinaire suivant l'une quelconque des revendications 1 à 5, **caractérisé en ce qu'**il comporte deux coques (4) articulées suivant un axe (5) de telle façon que les plaques de cuisson (2) amovibles portées par les coques (4) définissent entre elles un espace (21) apte à recevoir tous aliments à cuire.

7. Appareil culinaire suivant l'une quelconque des revendications 1 à 6, **caractérisé en ce que** le bouton de commande (7) est disposé à une distance de la plaque de cuisson (2) qu'il permet de débloquer, tel que l'utilisateur ne puisse toucher la plaque quand il actionne le bouton de commande (7).

8. Appareil culinaire suivant l'une quelconque des revendications 1 à 7, caractérisé en qu'il comporte, sous la plaque de cuisson (2) et du même côté que l'élément chauffant (3), un ressort (15) qui soulève la plaque de cuisson (2) par rapport à la coque (4) quand le moyen de blocage (1) est dégagé de celle-ci.

9. Appareil culinaire suivant la revendication 8, **caractérisé en ce qu'**il comporte un système de régulation composé d'une sonde (13), d'un thermostat (14) et du ressort (15) qui plaquent la sonde (13) contre la plaque de cuisson (2).

10. Appareil culinaire suivant l'une quelconque des revendications 1 à 9, **caractérisé en ce qu'**il comporte au moins un ressort de rappel (9) du moyen de blocage (1) ramenant celui-ci en position de verrouillage de la plaque (2) en l'absence de sollicitation du bouton de commande (7).

## Claims

1. A culinary appliance comprising at least one shell (4) and at least one control button (7) which is movable relative to the shell (4), the shell (4) incorporating a heating element (3) and carrying a removable cooking plate (2) which is fixed to said heating element (3) by means of at least one locking device (1) and which can be released by displacing said device (1), **characterized in that** it includes at least one lever (8) forming a crank-shaft assembly pivoting about an axis (12) by which it is fixed to the shell (4), one portion (20) of the lever (8) cooperating with the control button (7) and another portion (19) driving the locking device (1) when the control button (7) is pressed and acts on the lever (8).

2. A culinary appliance according to Claim 1, **characterized in that** the lever (8) has a central body (18) disposed along the axis (12), which turns about said axis (12) and is located between the portions (20, 19) which cooperate on the one hand with the control button (7) and on the other hand drive the locking device (1) consisting of a hook (1) tilting about the axis (12).

3. A culinary appliance according to Claim 2, **characterized in that** the lever (8) is a metal wire bent to form the portions (20, 19) cooperating on the one hand with the control button (7) and on the other hand driving the hook (1), these two portions, together with the portion of metal wire which connects them and forms the central body (18) of the lever, forming a crank-shaft assembly.

4. A culinary appliance according to any one of Claims 1 to 3, **characterized in that** the control button (7) can move in translation in a housing (16) provided in the shell (4) and perpendicular to the outer surface of said shell (4).

5. A culinary appliance according to any one of Claims 1 to 4, **characterized in that** the two portions (20, 19) of the lever (8) are the ends of said lever (8).

6. A culinary appliance according to any one of Claims 1 to 5, **characterized in that** it has two shells (4) hinged together along an axis (5) in such a way that the removable cooking plates (2) carried by the shells (4) define between them a space (21) suitable for receiving any foodstuff to be cooked.

7. A culinary appliance according to any one of Claims 1 to 6, **characterized in that** the control button (7) is disposed at a distance from the cooking plate (2) that it is capable of releasing, so that the user cannot touch the plate when he operates the control button (7).

8. A culinary appliance according to any one of Claims 1 to 7, **characterized in that,** underneath the cooking plate (2) and on the same side as the heating element (3), it has a spring (15) which raises the cooking plate (2) relative to the shell (4) when the locking device (1) is released from said shell (4).

9. A culinary appliance according to Claim 8, **characterized in that** it includes a regulation system comprising a probe (13), a thermostat (14) and the spring (15) which presses the probe (13) against the cooking plate (2).

10. A culinary appliance according to any one of Claims I to 9, **characterized in that** it includes at least one return spring (9) for the locking device (1) which returns said locking device (1) into a position securing the plate (2) when the control button (7) is not being pressed.

## Patentansprüche

1. Küchengerät, welches aufweist, mindestens eine Schale (4) und mindestens ein Steuerelement (7), das in Bezug auf die Schale (4) bewegbar ist, wobei die Schale (4) ein Heizelement (3) enthält und eine abnehmbare Kochplatte (2) trägt, die auf dem Heizelement (3) durch mindestens ein Verriegelungsmittel (1) befestigt ist und die durch Umstellung dieses Mittels (1) freisetzbar ist, **dadurch gekennzeichnet, dass** es mindestens eine Hebeleinrichtung (8) aufweist, die eine Kurbelwellen-Anordung bzw. eine gekröpfte Wellen-Anordnung bildet, die um eine Achse (12) schwenkt, durch die sie an der Schale (4) befestigt ist, wobei ein Abschnitt (20) der Hebeleinrichtung (8) mit dem Steuerelement (7) zusammenarbeitet und ein anderer Abschnitt (19) das Verriegelungsmittel (1) antreibt, wenn das Steuerelement (7) beansprucht wird und auf die Hebeleinrichtung (8) einwirkt.

2. Küchengerät nach Anspruch 1, **dadurch gekennzeichnet, dass** die Hebeleinrichtung (8) einen Zentralkörper (18) aufweist, welcher der Achse (12) folgend angeordnet ist, um diese drehend und zwischen den Abschnitten (20, 19) angeordnet, die einerseits mit dem Steuerelement (7) zusammenarbeiten und andererseits das Verriegelungsmittel (1) antreiben, das durch einen Haken (1) gebildet ist, der um die Achse (12) schwenkt.

3. Küchengerät nach Anspruch 2, **dadurch gekennzeichnet, dass** die Hebeleinrichtung (8) ein gekrümmter Metalldraht zum Bilden der Abschnitte (20, 19) ist, die einerseits mit dem Steuerelement (7) zusammenarbeiten und andererseits den Haken (1) antreiben, wobei diese zwei Abschnitte mit dem Abschnitt des Metalldrahts, der sie verbindet und hiervon den Zentralkörper (18) bildet, eine Kurbelwellen-Anordung bilden.

4. Küchengerät nach einem der Ansprüche 1 bis 3, **dadurch gekennzeichnet, dass** das Steuerelement (7) hinsichtlich einer Translation in einem Gehäuse (16), das in der Schale (4) verwirklicht ist, und senkrecht zur Außenfläche von dieser beweglich ist.

5. Küchengerät nach einem der Ansprüche 1 bis 4, **dadurch gekennzeichnet, dass** die zwei Abschnitte (20, 19) der Hebeleinrichtung (8) die Enden von dieser sind.

6. Küchengerät nach einem der Ansprüche 1 bis 5, **dadurch gekennzeichnet, dass** es zwei Schalen (4) aufweist, die derart einer Achse (5) folgend beweglich bzw. gelenkig angeordnet sind, dass die abnehmbaren Kochplatten (2), die von den Schalen (4) getragen werden, zwischen einander einen Raum (21) definieren, der geeignet ist, jegliche zu erhitzende Lebensmittel aufzunehmen.

7. Küchengerät nach einem der Ansprüche 1 bis 6, **dadurch gekennzeichnet, dass** das Steuerelement (7) in einem Abstand von der Kochplatte (2) angeordnet ist, dass es ein Entriegeln ermöglicht, derart dass der Verwender die Platte nicht berühren kann, wenn er das Steuerelement (7) betätigt.

8. Küchengerät nach einem der Ansprüche 1 bis 7, **dadurch gekennzeichnet, dass** es unter der Kochplatte (2) und auf der selben Seite wie das Heizelement (3) eine Feder (15) aufweist, welche die Kochplatte (2) in Bezug auf die Schale (4) anhebt, wenn das Verriegelungsmittel (1) außer Eingriff mit dieser ist.

9. Küchengerät nach Anspruch 8, **dadurch gekennzeichnet, dass** es ein Steuerungssystem aufweist, das aus einer Sonde (13), einem Thermostat (14) und der Feder (15) gebildet ist, welche die Sonde (13) gegen die Kochplatte (2) anlegen.

10. Küchengerät nach einem der Ansprüche 1 bis 9, **dadurch gekennzeichnet, dass** es mindestens eine Rückstellfeder (9) des Verriegelungsmittels (1) aufweist, die dieses in eine Verriegelungsstellung der Platte (2) in Abwesenheit einer Beanspruchung des Steuerelements (7) zurückbringt.
